# EUROPEAN PATENT APPLICATION

(11) **EP 2 829 729 A1**
(43) Date of publication of application: **28.01.2015**
(21) Application number: 13757978.5
(22) Date of filing: 05.03.2013
(51) Int. Cl.: F03G 6/06, F24J 3/08

(54) **GROUND SOURCE COOLING APPARATUS FOR SOLAR ENERGY ELECTRICITY GENERATING SYSTEM**

(30) Priority: 05.03.2012 CN 201210055430
(71) Applicant: Beijing Terasolar Energy Technologies Co., Ltd, Beijing 101102 (CN)
(72) Inventor: LIU, Yang, Beijing 100195 (CN)
(74) Representative: Gassner, Wolfgang
(86) International application number: PCT/CN2013/072197
(87) International publication number: WO 2013/131470

(57) **Abstract**

A ground source cooling apparatus applied to a solar power generation system. The apparatus includes a circulating medium (2) and an underground circulation cooling system (1), the underground circulation cooling system (1) is arranged below the ground surface, through the soil below the ground surface absorbing heat caused by the circulating medium, and through the ground surface releasing heat to the environment, so that to achieve the purpose of decreasing the temperature of the circulating medium. The apparatus can take the maximum advantage of land area occupied by the solar power generation system, which has features of low construction cost, simple and reliable operation, thus overcoming the limitations that a steam turbine cooling system in solar thermal power generation technology can only adopt the air-cooling technology in a specific area.

## Description

### TECHNICAL FIELD

The present invention relates to a ground source cooling apparatus and, in particular, to a ground source cooling apparatus for a solar energy electricity generating system.

### BACKGROUND

Earth surface receives solar radiation with a total amount of about 2.6×10²⁴ J throughout the year, about 50 percent of which is absorbed by the earth, half of the absorbed energy is radiated in the form of long wave radiation, and the rest becomes power of water circulation, air circulation and plant growth, so as to maintain the ground surface usually at about 15°C. The crustal layer of the earth surface can be divided into three zones, i.e.: a variable temperature zone, a constant temperature zone, and an increasing temperature zone, according to temperature change characteristics of the earth; in the variable temperature zone, there are periodical temperature changes within day and night, year, century and even much longer time due to the effect of the solar radiation, and the thickness thereof is generally 15-20m; the constant temperature zone almost has no temperature change, and usually has a depth of 20-30m.

The concept of heat pump technology is first proposed by a British. In a paper published by Thomson in 1852, an apparatus for connecting a compressor and an expander was described, which can provide heating or cooling to buildings; the history of a ground source heat pump with a heat exchanger of underground heat exchange pipeline can be traced back to a patent by a Swiss, H. Zoelly in 1912, however, such technology did not come into practical use until around 1950, a type of domestic heat pump taking an underground coil pipe as a heat source has been respectively researched in the U.S. and Britain.

With flourishing development of renewable energy utilization, such as solar energy utilization, all over the world, concentrated solar power (CSP) has been gradually acknowledged. In a steam turbine of a conventional CSP system, the cooling system takes up a large portion of the construction cost, about 15% of the total cost, and has a high operating cost; places with abundant solar energy resources in our country mostly are desert areas with poor water resources, a water-cooling system cannot be used there, and only an air-cooling system can be adopted to cool a steam turbine, and after decades of operational practice, it has been proved that both direct air-cooling and indirect air-cooling power plants are feasible. However, there are still problems caused by various reasons, such as chilly winter, hot summer, gale, irrational system design and improper operation management during the operation of the water-cooling system. Some of the problems above have been settled, which is evidenced by the operational practice that a 200MW air cooling unit has been put into operation in our country. From the comparison of the cooling systems of operating power plants, the direct air-cooling system has main features as follows: (1) high back-pressure; (2) large power consumption due to a forced air blower; (3) loud noise caused by the forced air blower; (4) space occupied by a steel platform is smaller than the reinforced concrete tower; (5) economic benefit about 30% higher than an indirect cooling system, heat dissipation area about 30% less than an indirect air cooling; (6) relatively economical cost but still high as a whole.

Therefore, there is an urgent need to develop an alternative technology, so as to overcome deficiencies of high CSP construction cost, unstable operation, inconvenience in maintenance and large loss caused by the air-cooling technology.

In addition, photovoltaic conversion efficiency also has a close relationship with the temperature of a photovoltaic cell itself, the photovoltaic conversion efficiency goes down persistently with the gradually rising of the temperature of itself; such property is particularly noticeable in the application field of a concentrating photovoltaic (CPV), the CPV itself needs to be well cooled when receiving high-flux solar rays, otherwise, the efficiency will be drastically decreased, even the photovoltaic cell may burn out by the high temperature of itself. A photovoltaic system, especially a concentration photovoltaic system, also needs a low-cost and highly-reliable heat-dissipating system.

### SUMMARY

The ground source heat pump of the present invention is utilized to release heat to the ground surface, then slowly dissipate heat to the environment, and release excess heat generated in a solar CSP power generation system with a low cost and a high efficiency, this technology is of great significance, which can overcome deficiencies of high CSP construction cost, unstable operation, inconvenience in maintenance and large loss caused by the air-cooling technology.

The present invention provides a ground source cooling apparatus applied to a solar power generation system, including a circulating medium and an underground circulation cooling system, where, the underground circulation cooling system is arranged below the ground surface, through the soil below the ground surface absorbing heat caused by the circulating medium, and through the ground surface releasing heat to the environment, so that to achieve the purpose of decreasing the temperature of the circulating medium.

Further, the ground source cooling apparatus also includes a double-loop heat exchange system for performing a double-loop cooling circulation; the double-loop heat exchange system condenses and cools a first circulating medium heat source entering a first loop, and the heat given off is carried away by a second circulating medium cold source circulating in a second loop, and then absorbed by the soil below the ground surface and released to the environment when flowing through the underground circulation cooling system.

Further, the ground source cooling apparatus is applied to a solar thermal power generation system, and the circulating medium is a thermodynamic cycle working medium water-steam of a steam turbine unit, to condense and cool exhausted steam of the steam turbine unit.

Preferably, when the ground source cooling apparatus is applied to a solar thermal power generation system, the double-loop heat exchange system condenses and cools the steam exhausted by the steam turbine entering a first loop, and the heat given off is carried away by a second circulating medium cold source circulating in a second loop, and then absorbed by the soil below the ground surface and released to the environment when flowing through the underground circulation cooling system.

Further, the ground source cooling apparatus is applied to a photovoltaic power generation system, and the circulating medium performs circulation cooling to a photovoltaic cell directly or indirectly.

Preferably, the ground source cooling apparatus is applied to a concentrating photovoltaic power generation system, and the circulating medium performs circulation cooling to a concentrating photovoltaic cell directly or indirectly.

Further, the underground circulation cooling system is a heat exchange pipeline arranged below the ground surface in an array.

Preferably, the heat exchange pipeline is a plastic pipeline, and the plastic pipeline is a pipeline of polyethylene-type, such as PE, PE-X or PE-RT.

Further, the heat exchange pipeline is vertically buried in the soil to obtain heat from deep soil under the ground, and is arranged as a whole in a single U-shaped structure or a dual U-shaped structure.

Further, the heat exchange pipeline is horizontally buried in the soil of the ground surface, and arranged horizontally as a whole, and has a larger heat exchange area.

Preferably, the heat exchange pipeline is arranged in the soil below the ground surface in a shaded area of the solar energy system, substantially does not receive solar light radiation or receives limited solar light radiation during the daytime, and thus has much lower temperature and a vast land use area.

Preferably, the heat exchange pipeline is arranged in the soil below the ground surface in a Fresnel array mirror field or a trough solar energy mirror field, has less solar light radiation and thus can achieve better heat dissipation and cooling effect.

It should be noted that, the soil below the ground surface is a broad concept, which includes the soil itself as well as sand, stone and moisture mixed in the soil, surface layer sand in a desert area, rock and filled pouring mixture in surface layer of a rocky area, high moisture mixture in surface layer of mudflat and marshland areas etc.

The ground source cooling apparatus according to embodiments of the present invention is buried below the ground surface, free from sunshine and touch damage of an operator, since the soil heat absorption is large, and meanwhile it can take the maximum advantage of land area of solar energy mirror field, which has features of low construction cost, simple and reliable operation, thus overcoming the limitations that a solar power station can only be set up in an and areas with relatively richer solar energy resources, and a steam turbine cooling system can only adopt the air-cooling technology, thereby reducing both the construction cost and the operation cost.

### BRIEF DESCRIPTION OF DRAWINGS

Embodiments of the present invention will be explained hereinafter with reference to the accompanying drawings, in which:
FIG. 1 is a schematic diagram of a ground source cooling apparatus applied to a solar power generation system according to a first embodiment of the present invention;
FIG 2 is a schematic diagram of a ground source cooling apparatus applied to a solar power generation system according to a second embodiment of the present invention;
FIG 3 shows a circulation cooling system of an underground circulation cooling system; and
FIG 4 shows another circulation cooling system of the underground circulation cooling system.

### DESCRIPTION OF EMBODIMENTS

On the basis of data analysis, the total heat of sunlight received by the ground surface mainly includes ground surface diffuse reflection radiation heat and soil absorption heat; the heat absorbed by the soil is kept balance through ground surface long-wave radiation, water convection, air convection and heat absorbed during plant growth, and the annual average temperature of the ground surface is kept around 15 °C ; it can be concluded roughly from the above that the ground surface has extremely tremendous heat releasing capacity, and in a shaded area, since there is no sunlight incident to the ground surface, the ground surface radiation heat achieves a new balance with the environment, so that to keep the average temperature of the ground surface less than 15 °C for a long time; besides, the surface soil has large mass, and thus possessing a huge heat storage capacity and temperature inertia. Accordingly, the present invention proposes a ground source cooling apparatus applied to a solar power generation system, by means of the huge heat storage capacity and heat dissipation capacity of the ground surface in the shaded area, so as to overcome the problems in the prior art.

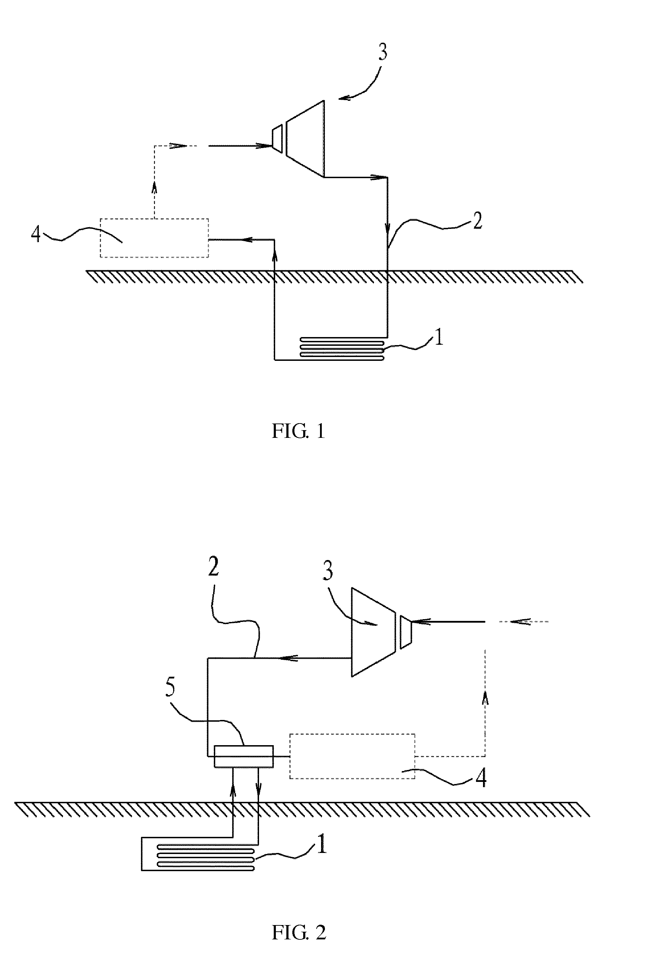

FIG. 1 is a schematic diagram of a ground source cooling apparatus applied to a solar power generation system according to a first embodiment of the present invention. As shown in FIG. 1, the ground source cooling apparatus includes an underground circulation cooling system 1 and a circulating medium 2. The underground circulation cooling system 1 is arranged below the ground surface, through the soil below the ground surface absorbing heat caused by the circulating medium 2, and through the ground surface releasing heat to the environment, so that to achieve the purpose of decreasing the temperature of the circulating medium 2. The system is applied to a solar thermal power generation system, and the circulating medium 2 inside the heat exchange pipeline can be a working medium water-steam for a thermodynamic cycle of a steam turbine unit, to condense and cool the exhaust of the steam turbine unit. A steam turbine unit 3 provides circulating medium heat source to the underground circulation cooling system 1; the underground circulation cooling system 1 is arranged below the ground surface, the circulating medium 2 heat source enters the underground circulation cooling system 1 driven by the circulation-assistant apparatus 4, so as to achieve a purpose of cooling down the steam turbine unit 3, through the soil below the ground surface absorbing heat and the ground surface releasing heat.

The circulating medium can be water. In FIG. 1, the steam turbine unit 3 receives superheated water steam of high temperature and high pressure, only a small portion of the heat is used for completing electrical power output, driven by the water steam, there is a need to exhaust a large amount of heat carried by low temperature, low pressure steam to the environment, the circulating medium 2 provided by the steam turbine unit 3 is gaseous working medium water-steam (heat source). In a practical solar power generation system, it is necessary to condense the low temperature, low pressure working medium water-steam exhausted to a liquid state by the steam turbine while releasing a large amount of heat, by conventional air cooling and water cooling manners. Because places with abundant solar energy resources in most of our country are arid desert areas with poor water resources, it is inconvenient to cool the steam turbine with a water cooling system; a cooling treatment can only be performed by an air cooling technology with high construction cost and complex operation in the prior art. In one example, configuration features of a trough array solar energy mirror field, especially a Fresnel array trough solar energy mirror field are fully used. In the case of a Fresnel array trough solar energy mirror field, a vast land area is needed, for example, a 50 MW(e) unit needs a land area of 1.5 million square meters (including the thermal energy storage system); on the surface of the earth with solar radiation, about 50 percent of the solar heat incident to the surface of the earth is directly absorbed by the earth, half of the absorbed energy is radiated in the form of long-wave radiation, and the rest becomes a power of water circulation, air circulation and plant growth, so that the ground surface is usually maintained at about 15°C.

In an example, the underground circulation cooling system 1 is a heat exchange pipeline arranged below the ground surface in array, so as to overcome corrosion (especially saline-alkaline soil corrosion) problem. The heat exchange pipeline is preferably a plastic pipeline, such as PE, PE-X or PE-RT polyethylene-type pipeline. The heat exchange pipeline is horizontally buried in the soil, to extract heat from deep soil. It can be arranged in a single U-shaped structure or a dual U-shaped structure as a whole, so as to uniformly release the heat in an axial direction. The heat exchange pipeline is horizontally buried in the soil of the ground surface, and arranged horizontally as a whole, for example, with a depth of 0.5m, and has a larger heat exchange area. The condensed and cooled working medium water flows through a circulation-assistant apparatus 4, such as a solar heat collector, and becomes superheated water steam of high temperature and high pressure again after receiving convergent solar heat, and is transported to the steam turbine unit 3 to generate power, and then becomes low temperature, low pressure gaseous circulating medium heat source to be condensed, and completes a new circulation.

The heat exchange pipeline is buried below the ground surface, free from sunshine and touch damage of an operator, since the soil heat absorption is large, and meanwhile it can take the maximum advantage of land area of solar energy mirror field, which has features of low construction cost, simple and reliable operation, thus overcoming limitations that a solar power station can only be set up in an arid areas with relatively richer solar energy resources, and a steam turbine cooling system can only adopt the air-cooling technology, thereby reducing both the construction cost and the operation cost, and having excellent heat exchange and heat storage capacities.

As an example, a 50 MWe unit needs a land area of 1.5 million square meters, and the heat exchange pipeline is arranged in the soil below 0.5m, an input temperature is 40°C, assuming that the temperature of the ground surface is 10°C, the soil is limestone with a heat conductivity of 0.98 W/mk, a specific heat capacity of 0.85 kJ/kgK, and a density of 2880 kg/m³; the steam turbine needs to exhaust heat of about 100MW in 24 hours; assuming that the ground surface neither releases heat to the environment, nor releases heat to the soil below 0.5m, then the daily heat dissipation can only cause the temperature of such volume of soil to raise 0.25 °C ; assuming that a sum of a convection heat transfer coefficient and a radiation heat transfer coefficient of the ground surface to the air is 10 W/m'k, a temperature difference between the air and the ground surface only needs to be kept at about 6.5 °C , the cooling of the power can be completed (in a case of no sunlight incident to the ground surface or little sunlight incident to the ground surface, there is a certain temperature difference between the ground surface temperature and the ambient temperature), and areas with abundant solar energy density in our country mostly are those with abundant wind resources, and the heat transfer coefficient thereof is much larger than the heat transfer coefficient in the above calculation, and the areas have a real and good heat exchange performance.

FIG. 2 is a schematic diagram of a ground source cooling apparatus applied to a solar power generation system according to a second embodiment of the present invention. The ground source cooling apparatus can be applied to a solar thermal power generation system, as shown in FIG. 2, the ground source cooling apparatus includes an underground circulation cooling system 1, a circulating medium 2 and a double-loop heat exchange system 5, for performing a double-loop cooling circulation heat exchange. The double-loop heat exchange system condenses and cools a first circulating medium (heat source) entering a first loop, and the heat given off is carried away by a second circulating medium (cold source) circulating in a second loop, and then absorbed by the soil below the ground surface and released to the environment when flowing through the underground circulation cooling system 1. Particularly, a steam turbine unit 3 and a first loop of the double-loop heat exchange system 5 form a group of loops, and the inner circulating medium is a first circulating medium 2-1; the underground circulation cooling system 1 is arranged below the ground surface, and forms another group of loops together with a second loop of the double-loop heat exchange system 5, and the inner circulating medium of the loop is a second circulating medium 2-2. The first circulating medium 2-1 and the second circulating medium 2-2 perform heat exchange within the double-loop heat exchange system 5, the heat provided by the first circulating medium 2-1 is transferred below the ground surface via the second circulating medium 2-2, so that to achieve the purpose of decreasing the temperature of the first circulating medium 2-1 itself in the steam turbine unit 3, through the soil absorbing the heat and the ground surface releasing the heat; the second circulating medium 2-2 inside the heat exchange pipeline can be liquid water; preferably, the liquid water of the second circulating medium contains an anti-freezing agent.

In an example, the underground circulation cooling system 1 is a heat exchange pipeline arranged below the ground surface in array, the inner circulating medium is a liquid second circulating medium, and the problem of freezing in cold days substantially does not occur, because heat exchange is continuously performed to the first circulating medium 2-1 exhausted by the steam turbine. The heat exchange pipeline can be a plastic pipeline, and in particular, a pipeline of polyethylene-type, such as PE, PE-X or PE-RT which has a good anti-corrosive performance. The heat exchange pipeline is vertically buried in the soil to extract heat from deep soil, and is arranged as a whole in a single U-shaped structure or a dual U-shaped structure, the heat exchange pipeline can be arranged at a depth of 10-15m. Preferably, the heat exchange pipeline is arranged below the ground surface in a shaded area of solar energy mirror field, substantially does not receive solar light radiation or receives limited solar light radiation during the daytime, which facilitates releasing of the heat on the ground surface to the atmospheric environment, and thus has a vast land use area. Preferably, the heat exchange pipeline is arranged in the soil below the ground surface in a Fresnel array mirror field or a trough solar energy mirror field, which has less solar light radiation and thus can achieve better heat dissipation and cooling effect. The condensed and cooled first circulating medium flows through a circulation-assistant apparatus 4, such as a solar heat collector, and becomes superheated water steam of high temperature and high pressure again after receiving convergent solar heat, and is transported to the steam turbine unit to generate power, and then becomes low temperature, low pressure gaseous circulating medium heat source, and completes a new circulation.

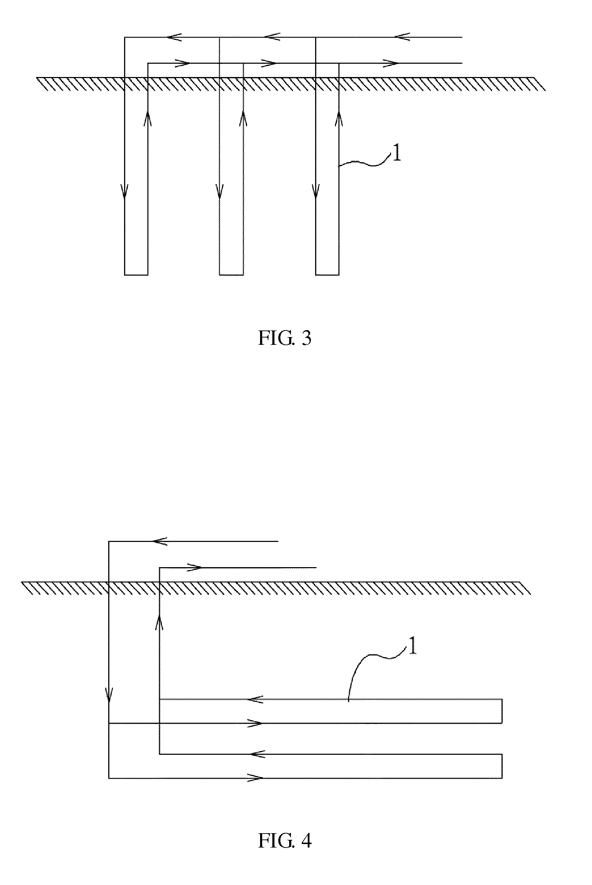

FIG. 3 shows a circulation cooling system of an underground circulation cooling system. As shown in FIG. 3, the underground circulation cooling system 1 is mainly applied to the first embodiment of apparatus according to the present invention, and is vertically arranged below the ground surface, which adopts a dual U-shaped structure at a relatively deep position, thus enhancing the capacity of releasing heat to the ground and reducing the number of holes dug vertically.

FIG. 4 shows another circulation cooling system of the underground circulation cooling system. As shown in FIG. 4, the underground circulation cooling system 1 is mainly applied to the second embodiment of the present invention, and the plurality of heat exchange pipeline thereof is horizontally arranged at a shallow position under the ground, such as 0.5m below the ground surface, the heat exchange pipeline releases the heat in the soil of the shallow ground, then the heat absorbed by the shallow ground by means of the heat absorption capacity of the soil and huge heat exchange area is released to the atmosphere environment, and completes heat releasing of the steam turbine.

It should be noted that, the ground source cooling apparatus is applied to a photovoltaic power generation system, and the circulating medium performs circulation cooling to a photovoltaic cell directly or indirectly; especially applied to a concentrating photovoltaic power generation system, and the circulating medium performs circulation cooling to a concentrating photovoltaic cell directly or indirectly; the excess heat of the photovoltaic cell is released to the circulating medium with the circulating medium flowing through the back of the photovoltaic cell, thus solving the problems of itself, and guaranteeing a good conversion efficiency and a service life; the circulating medium forms a medium heat source after receiving the heat, connects to the underground circulation cooling system 1 directly or via an overground circulating heat exchange system, and releases the received heat indirectly or directly in the soil or to the ground surface, after the purpose of lowering the temperature of the medium heat source is achieved, and then a next circulation of excess heat releasing of the photovoltaic cell begins.

In order to maximize soil utilization, agricultural planting can be performed on the soil above the ground surface of the heat exchange pipeline in the ground source cooling apparatus applied to a solar power generation system, while providing a huge usable vegetation area, effectively preventing freezing of the green vegetation in winter, improving the yield, and also further reducing the desert area of the solar energy mirror field area. To obtain a more effective radiation area, the ground source cooling apparatus arranges the heat exchange pipeline below the ground surface of the shaded area of the solar energy system; in particular, the heat exchange pipeline is arranged below a Fresnel array mirror field or a trough solar energy mirror field, thus achieving a maximum use area, a minimum direct sunlight radiation, and most efficient heat dissipation and cooling effect.

Needless to say, the apparatus according to the present invention can well be applied to cooling systems in other industrial fields.

Apparently, a number of variations can be made to the present invention described herein without departing from a true spirit and scope of the present invention. Therefore, all such variations as would be predicted by persons skilled in the art are intended to be included within the scope of the appended claims, and the scope of the present invention is defined by the claims appended hereto.

## Claims

1. A ground source cooling apparatus applied to a solar power generation system, comprising a circulating medium and an underground circulation cooling system, wherein, the underground circulation cooling system is arranged below the ground surface, through the soil below the ground surface absorbing heat caused by the circulating medium, and through the ground surface releasing heat to the environment, so that to achieve the purpose of decreasing the temperature of the circulating medium.

2. The ground source cooling apparatus applied to a solar power generation system according to claim 1, further comprising a double-loop heat exchange system for performing a double-loop cooling circulation.

3. The ground source cooling apparatus applied to a solar power generation system according to claim 2, wherein the double-loop heat exchange system condenses and cools a first circulating medium heat source entering a first loop, and the heat given off is carried away by a second circulating medium cold source circulating in a second loop, and then absorbed by the soil below the ground surface and released to the environment when flowing through the underground circulation cooling system.

4. The ground source cooling apparatus applied to a solar power generation system according to claim 1, wherein the ground source cooling apparatus is applied to a solar thermal power generation system, and the circulating medium is a thermodynamic cycle working medium of a steam turbine unit.

5. The ground source cooling apparatus applied to a solar power generation system according to claim 1 or 2, wherein the ground source cooling apparatus is applied to a photovoltaic power generation system, and the circulating medium performs circulation cooling to a photovoltaic cell directly or indirectly.

6. The ground source cooling apparatus applied to a solar power generation system according to claim 5, wherein the ground source cooling apparatus is applied to a concentrating photovoltaic power generation system, and the circulating medium performs circulation cooling to a concentrating photovoltaic cell directly or indirectly.

7. The ground source cooling apparatus applied to a solar power generation system according to claim 1 or 2, wherein the underground circulation cooling system is a heat exchange pipeline arranged below the ground surface in an array.

8. The ground source cooling apparatus applied to a solar power generation system according to claim 7, wherein the heat exchange pipeline is a plastic pipeline.

9. The ground source cooling apparatus applied to a solar power generation system according to claim 8, wherein the plastic pipeline is a pipeline of polyethylene-type, such as PE, PE-X or PE-RT.

10. The ground source cooling apparatus applied to a solar power generation system according to claim 7, wherein the heat exchange pipeline is vertically buried in the soil, and arranged as a whole in a single U-shaped structure or a dual U-shaped structure.

11. The ground source cooling apparatus applied to a solar power generation system according to claim 7, wherein the heat exchange pipeline is horizontally buried in the soil of the ground surface.

12. The ground source cooling apparatus applied to a solar power generation system according to claim 2, wherein the second circulating medium in the double-loop heat exchange system is liquid water.

13. The ground source cooling apparatus applied to a solar power generation system according to claim 12, wherein the liquid water of the second circulating medium contains an anti-freezing agent.

14. The ground source cooling apparatus applied to a solar power generation system according to claim 1 or 2, wherein the heat exchange pipeline is arranged in the soil below the ground surface in a shaded area of the solar energy system.

15. The ground source cooling apparatus applied to a solar power generation system according to claim 14, wherein the heat exchange pipeline is arranged in the soil below the ground surface in a Fresnel array mirror field or a trough solar energy mirror field.

16. The ground source cooling apparatus applied to a solar power generation system according to claim 15, wherein agricultural planting is performed on the soil above the ground surface of the heat exchange pipeline.

17. The ground source cooling apparatus applied to a solar power generation system according to claim 1 or 2, comprising a circulation-assistant apparatus, wherein the circulating medium enters the underground circulation cooling system driven by the circulation-assistant apparatus.
